# EUROPEAN PATENT SPECIFICATION

(11) **EP 3 768 036 B1**
(45) Date of publication and mention of the grant of the patent: **06.04.2022**
(21) Application number: 20183735.8
(22) Date of filing: 02.07.2020
(51) Int. Cl.: H04W 76/28, G08B 25/10, H04W 56/00, G08B 17/00, H04W 84/18

(54) **COMMUNICATIONS DEVICE, COMMUNICATIONS SUBSYSTEM, COMMUNICATIONS SYSTEM, COMMUNICATION METHOD, AND COMPUTER-READABLE NON-TRANSITORY STORAGE MEDIUM FOR FORWARDING SIGNALS**
KOMMUNIKATIONSVORRICHTUNG, KOMMUNIKATIONSSUBSYSTEM, KOMMUNIKATIONSSYSTEM, KOMMUNIKATIONSVERFAHREN UND COMPUTERLESBARES NICHTFLÜCHTIGES SPEICHERMEDIUM UM SIGNALE WEITERZULEITEN
DISPOSITIF DE COMMUNICATIONS, SOUS-SYSTÈME DE COMMUNICATIONS, SYSTÈME DE COMMUNICATION, PROCÉDÉ DE COMMUNICATION ET SUPPORT D'INFORMATIONS NON TRANSITOIRE LISIBLE PAR ORDINATEUR POUR RELAYER DES SIGNAUX

(30) Priority: 02.07.2019 JP 2019124063
(43) Date of publication of application: 20.01.2021
(73) Proprietor: Panasonic Intellectual Property Management Co., Ltd., Osaka-shi, Osaka 540-6207 (JP)
(72) Inventor: Harada, Kenji, Osaka-shi, Osaka 540-6207 (JP)
(74) Representative: Appelt, Christian W.

(56) References cited:
- EP-A1- 2 790 335
- EP-A1- 3 273 628
- EP-A1- 3 451 305

## Description

### Technical Field

The present disclosure generally relates to a communications device, a communications subsystem, a communications system, a communication method, and a computer-readable non-transitory storage medium, and more particularly relates to a communications device configured to establish intermittent reception, and a communications subsystem, communications system, communication method, and computer-readable non-transitory storage medium including or using such a communications device.

### Background Art

A fire alarm system (communications system) has been known in the art which includes a plurality of fire sensors (communications devices, or second devices) for detecting the outbreak of a fire and a receiver (first device) for establishing wireless communication with the fire sensors via radio waves (see, for example, JP 2006-343983 A).

In the fire alarm system disclosed in JP 2006-343983 A, each of the fire sensors includes a sensing unit, a wireless transmission and reception unit, and a control unit. The sensing unit detects the outbreak of a fire by detecting a variation in temperature or smoke involved with a fire. The wireless transmission and reception unit transmits and receives a wireless signal to/from the receiver. The control unit controls the wireless transmission and reception unit at least when a fire is detected by the sensing unit, thereby having fire detection information transmitted as a wireless signal.

The receiver includes a wireless transmission and reception unit and a control unit. The wireless transmission and reception unit transmits and receives a wireless signal to/from the fire sensors. The control unit controls the wireless transmission and reception unit and obtains fire detection information from the wireless signal received at the wireless transmission and reception unit. The patent publication EP3451305 shows a similar system.

If each communications device (fire sensor) is configured to be able to communicate with not only the first device (i.e., the receiver) but also a second device (i.e., another fire sensor), which is different from the first device, then the timing to communicate with the first device and the timing to communicate with the second device could overlap with each other, or be too close to each other to say the least, on the time axis. In that case, communication with the first device could delay the communications device's communication with the second device.

It is therefore an object of the present disclosure to reduce the chances of communication with the first device causing a delay in communication with the second device.

### Summary

A communications device according to an aspect of the present disclosure includes a communications unit and a control unit. The communications unit performs transmission of a signal to a first device and intermittent reception of intermittently performing reception operation of receiving a signal from a second device. The control unit controls the communications unit. The control unit makes, when a transmission opportunity of transmitting the signal to the first device arises, the communications unit postpone transmitting the signal to the first device until after the communications unit has performed the intermittent reception at least once.

A communications subsystem according to another aspect of the present disclosure includes: the communications device described above; and the second device.

A communications system according to still another aspect of the present disclosure includes: the communications subsystem described above; and the first device.

A communication method according to yet another aspect of the present disclosure is designed to be used in a communications device that transmits a signal to a first device and receives a signal from a second device. The communication method includes: performing, unless a transmission opportunity of transmitting the signal to the first device arises, intermittent reception of intermittently performing reception operation of receiving the signal from the second device; and postponing, when the transmission opportunity of transmitting the signal to the first device arises, transmitting the signal to the first device until after having performed the intermittent reception at least once.

A computer-readable non-transitory storage medium according to yet another aspect of the present disclosure stores a program that is designed to cause at least one processor to carry out the communication method described above.

### Brief Description of Drawings

FIG. 1 is a block diagram schematically illustrating configurations for a communications subsystem and communications system, each including a communications device according to an exemplary embodiment of the present disclosure;
FIG. 2 is a flowchart showing the procedure of operation of the communications device operating in a first transmission mode;
FIG. 3 is a flowchart showing the procedure of operation of the communications device operating in a second transmission mode;
FIG. 4 illustrates a first exemplary sequence of operations of the communications system;
FIG. 5 illustrates a second exemplary sequence of operations of the communications system;
FIG. 6 illustrates a third exemplary sequence of operations of the communications system; and
FIG. 7 illustrates how the communications device performs a time division multiple access communication operation.

### Description of Embodiments

### (Embodiments)

An embodiment of the present disclosure will be described. Note that the following embodiment is only an exemplary one of various embodiments of the present disclosure and should not be construed as limiting. Rather, the embodiment may be readily modified, combined, or replaced in various manners depending on a design choice or any other factor without departing from a true spirit and scope of the present disclosure.

### (1) Overview

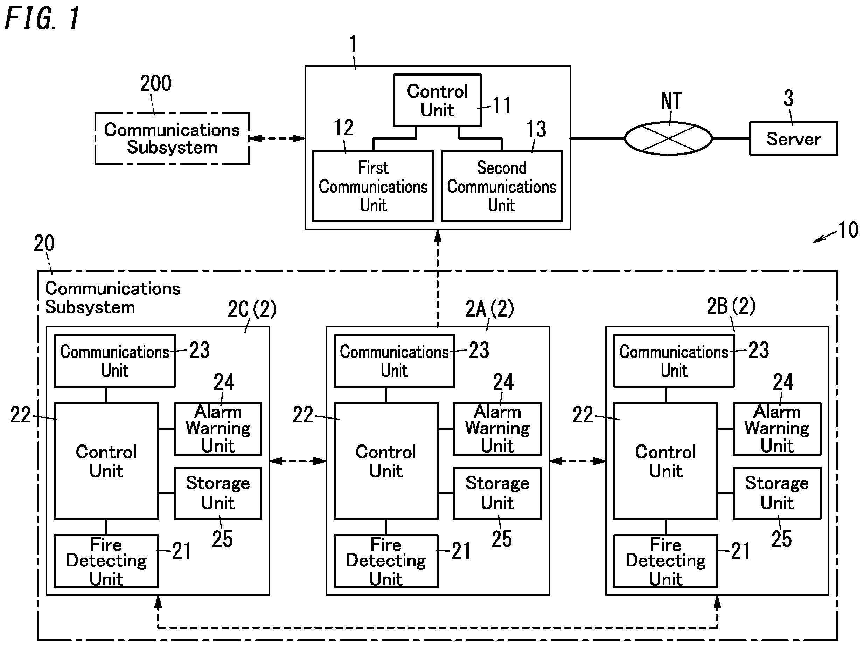

FIG. 1 is a block diagram illustrating a communications system 10 according to an exemplary embodiment. The communications system 10 according to this embodiment includes a first device 1 and a communications subsystem 20. The communications subsystem 20 includes a plurality of communications terminals 2. The communications subsystem 20 may include up to fifteen communications terminals 2, for example. In the following description, when these three communications terminals 2 need to be distinguished from each other, the communications terminals 2 will be sometimes hereinafter referred to as "communications terminals 2A, 2B, and 2C, " respectively.

The first device 1 is configured to be able to communicate wirelessly with a prescribed one (such as the communications terminal 2A) out of the plurality of communications terminals 2A, 2B, and 2C. In this embodiment, the communication between the communications terminal 2A and the first device 1 is supposed to be a unidirectional one from the communications terminal 2A to the first device 1, except when an acknowledgement (ACK) is transmitted from the first device 1 to the communications terminal 2A. As used herein, the ACK is a reception confirmation signal notifying the sender (communications partner) that the signal has been received safely. Also, each of the communications terminals 2A, 2B, 2C is configured to be able to communicate wirelessly with the other communications terminals 2. In this case, the communications terminal 2A with the ability to communicate with the first device 1 corresponds to a telecommunications device, and the other communications terminals 2B, 2C correspond to second devices. In FIG. 1, the dashed arrows indicate wireless signal transfer paths.

In the following description, the communications system 10 is supposed to be used in a single-family dwelling house as an example. However, this is only an example and should not be construed as limiting. Naturally, the communications system 10 does not have to be used in a single-family dwelling house but may also be used in any of various other types of buildings including multi-family dwelling houses, and non-dwelling houses such as offices and stores.

In this embodiment, each of the communications terminals 2 is configured as a fire alarm device for sounding the alarm on detecting a fire. Upon detecting the outbreak of a fire, each communications terminal 2 sounds the alarm and sends out a fire warning to the other communications terminals 2. On receiving the fire warning from another communications terminal 2, each communications terminal 2 sounds the alarm. Among the communications terminals 2A, 2B, 2C, the communications terminal 2A notifies, on detecting the outbreak of a fire by itself or receiving the fire warning from another communications terminal 2B or 2C, the first device 1 of the outbreak of the fire. Upon receipt of the fire warning from the communications terminal 2A, the first device 1 forwards the fire warning to a server 3 over a network NT.

The communications system 10 of this embodiment is configured to allow the respective communications terminals 2 to establish synchronous communication between them. Each of the communications terminals 2 is configured to perform intermittent reception of intermittently performing reception operation of receiving signals to reduce the power consumption. Specifically, the communications terminal 2A transmits a beacon signal to the other communications terminals 2B, 2C as a synch signal defining the timing at which each communications terminal 2 is supposed to transmit or receive a signal. Each communications terminal 2 transmits a signal to the other communications terminals 2 at a timing when each of the other communications terminals 2 is performing the intermittent reception. The communications terminal 2A transmits various types of signals including a keep-alive signal and a signal indicating the battery level, for example, to the first device 1 at arbitrary timings (e.g., a few times a day).

In this embodiment, the communications device (communications terminal 2A) includes a communications unit 23 and a control unit 22. The communications unit 23 performs transmission of a signal to the first device 1 and intermittent reception of intermittently performing reception operation of receiving a signal from a second device (another communications terminal 2B, 2C). The control unit 22 makes, when a transmission opportunity of transmitting the signal to the first device 1 arises, the communications unit 23 postpone transmitting the signal to the first device 1 until after the communications unit 23 has performed the intermittent reception at least once. This allows the communications device (communications terminal 2A) to reduce the chances of the transmission of the signal to the first device 1 causing a delay in communication with the second device (another communications terminal 2B, 2C). Therefore, this reduces, when a fire breaks out, for example, the chances of causing a delay in the transfer of the fire warning from the communications device (communications terminal 2A) that has detected the outbreak of the fire to the second device (another communications terminal 2B, 2C).

### (2) Specifics

Next, specifics of the communications system 10 according to this embodiment will be described.

### (2.1) First device

First of all, a configuration for the first device 1 will be described. The first device 1 has the capability of serving as a gateway of relaying communication between the network NT and the communications subsystem 20. The first device 1 may be implemented as, for example, a controller for an energy management system for managing the consumption of energy in a single-family dwelling house, for example.

The first device 1 has the capability of communicating with the communications terminal 2A and the server 3. The first device 1 is configured to operate with power supplied by a utility power supply. The first device 1 includes a control unit 11, a first communications unit 12, and a second communications unit 13.

The control unit 11 may be implemented, for example, as a microcomputer including a processor and a memory. In other words, the control unit 11 is implemented as a computer system including a processor and a memory. The processor's execution of an appropriate program allows the computer system to function as the control unit 11. The program may be stored in advance in the memory. Alternatively, the program may also be downloaded through a telecommunications line such as the Internet or be distributed after having been recorded in some non-transitory storage medium such as a memory card. Still alternatively, the program may also be downloaded from a server over the Internet via power line communication (PLC) or by wireless communication.

The control unit 11 controls the first communications unit 12 and the second communications unit 13.

The first communications unit 12 is configured to communicate with the communications terminal 2A by transmitting and receiving wireless signals to/from the communications terminal 2A via radio waves. The first communications unit 12 includes an antenna, a transmitter circuit, and a receiver circuit. The transmitter circuit modulates data supplied from the control unit 11 into a wireless signal and transmits the wireless signal via the antenna. The receiver circuit demodulates a wireless signal received via the antenna and outputs the demodulated data to the control unit 11. The first communications unit 12 may transmit and receive wireless signals in compliance with the "Specific Low Power Radio Station" standard defined by Article 6(4)(ii) of Regulations for Enforcement of the Radio Act for the country of Japan. The first communications unit 12 may establish wireless communication via radio waves on a 920 MHz band, for example.

The second communications unit 13 is a communications interface with the ability to communicate with the server 3. The second communications unit 13 may be connected to the network NT (such as the Internet) via a router and a modem, for example, and is configured to communicate with the server 3 over the network NT. The second communications unit 13 transmits the data supplied from the control unit 11 to the server 3. The second communications unit 13 also outputs the data received from the server 3 to the control unit 11. Optionally, the first communications unit 12 and the second communications unit 13 may be implemented as a single communications IC with the ability to establish communication in compliance with two communications protocols.

The control unit 11 and the first communications unit 12 are configured to readily receive signals from the communications terminal 2A at any time. The control unit 11 is configured to, upon receiving a signal from the communications terminal 2A safely, transmit an ACK from the first communications unit 12 to the communications terminal 2A.

Also, when the first communications unit 12 receives a notification signal with a fire warning message from the communications terminal 2A, the control unit 11 notifies the server 3, via the second communications unit 13, that a fire has broken out.

### (2.2) Communications terminal

Next, the configuration of the communications terminals 2 will be described. Each communications terminal 2 is implemented as a fire alarm device with the capability of sounding the fire alarm when detecting the outbreak of a fire and the capability of communicating with the other communications terminals 2. The communications terminal 2 may be installed, for example, on the ceiling of a room or hallway of a dwelling house (which may be a single-family or multi-family dwelling house). The communications terminal 2 is configured to be powered by a battery such as a dry battery.

In this embodiment, the communications subsystem 20 includes three communications terminals 2A-2C. Out of the three communications terminals 2A-2C, the communications terminal 2A serves as a communications device to communicate with the first device 1 (i.e., serves as a master device in the communications subsystem 20), and the other communications terminals 2B, 2C serve as second devices (i.e., serve as slave devices in the communications subsystem 20). In this case, the communications terminal 2A serving as the master device is suitably installed at a location where the communications terminal 2A is able to communicate with every other communications terminal 2B, 2C. Note that the communications partner that the first device 1 communicates with does not have to be the communications terminal 2A. Alternatively, the first device 1 may designate any one of the plurality of communications terminals 2A-2C as its communications partner.

In this embodiment, each of the plurality of communications terminals 2 is suitably installed at a location where the communications terminal 2 is able to communicate with at least one of the other communications terminals 2. When receiving a coordination signal from another communications terminal 2 such that all of the plurality of communications terminals 2 may coordinate with each other to sound the fire alarm, each communications terminal 2 relays the coordination signal to the communications terminal 2 that has not sounded the fire alarm yet. This allows, even when communication cannot be established successfully between a pair of communications terminals 2 due to the presence of some obstacle, for example, between them, all of the plurality of communications terminals 2 to sound the fire alarm in coordination with each other by receiving the coordination signal via another communications terminal 2.

In the following description, a configuration for the communications terminal 2A for use as the communications device will be described. Note that although the communications terminal 2A has the capability of serving as a master device to communicate with the first device 1, neither the communications terminal 2B nor the communications terminal 2C has the capability of communicating with the first device 1. That is to say, in the communications terminals 2B, 2C, the communications unit 23 does not communicate with the first device 1 but does communicate with the other communications terminals 2, which is a major difference from the communications terminal 2A. In the other respects, however, the communications terminals 2B, 2C have the same configuration as the communications terminal 2A. Thus, description of the communications terminals 2B, 2C will be omitted herein.

The communications terminal 2A includes a fire detecting unit 21, the control unit 22, the communications unit 23, an alarm warning unit 24, and a storage unit 25.

The fire detecting unit 21 is configured to detect smoke produced by a fire and vary the detected quantity (such as a voltage value) according to the amount (e.g., concentration) of the smoke produced. Examples of smoke detection methods include a photoelectric one. The photoelectric smoke detection method is a method of detecting smoke produced by making a photodetector detect scattering light, which has been produced by reflection of a light beam emitted from a light-emitting element, from particles of the smoke. Naturally, the fire detecting unit 21 may also be configured to detect the outbreak of a fire by a thermal method, i.e., based on the quantity of heat generated by the fire. In any case, the fire detecting unit 21 compares the detected quantity with a threshold value, which has been set in advance by the fire detecting unit 21, and determines that a fire should have broken out, when finding the detected quantity greater than the threshold value.

The control unit 22 may be implemented as a microcomputer including a processor and a memory, for example. In other words, the control unit 22 is implemented as a computer system including a processor and a memory. The processor's execution of an appropriate program stored in the storage unit 25 such as a nonvolatile memory, for example, allows the computer system to function as the control unit 22. The program may be stored in advance in the memory. Alternatively, the program may also be downloaded through a telecommunications line such as the Internet or be distributed after having been recorded in some non-transitory storage medium such as a memory card. Still alternatively, the program may also be downloaded from a server by wireless communication. The control unit 22 controls the communications unit 23 and the alarm warning unit 24.

The communications unit 23 transmits and receives wireless signals via radio waves. The communications unit 23 is configured to communicate with the first device 1 and the other communications terminals 2B, 2C (second devices). The communications unit 23 includes an antenna, a transmitter circuit, and a receiver circuit. The transmitter circuit modulates data supplied from the control unit 22 into a wireless signal and transmits the wireless signal via the antenna. The receiver circuit demodulates a wireless signal received via the antenna and outputs the demodulated data to the control unit 22. When communicating with the first device 1, the communications unit 23 may transmit and receive wireless signals in compliance with the "Specific Low Power Radio Station" standard using radio waves on the 920 MHz band, for example. When communicating with the other communications terminals 2B, 2C, the communications unit 23 may transmit and receive wireless signals in compliance with the "Security Radio Equipment for Low Power Radio Station" standard defined in Article 6(4)(iii) of the Regulations for Enforcement of the Radio Act for the country of Japan using radio waves on the 426 MHz frequency band, for example. That is to say, in the communications terminal 2A according to this embodiment, a first frequency band for use in communication with the first device 1 and a second frequency band for use in communication with the second devices (i.e., the communications terminals 2B, 2C) are different from each other. Specifically, the first frequency band is the 920 MHz band, the second frequency band is 426 MHz band, and the first frequency band is more than twice as high as the second frequency band.

The alarm warning unit 24 includes a buzzer for emitting a buzz specified by the control unit 22 and a loudspeaker for emitting a verbal warning message specified by the control unit 22.

In this case, the communications protocol applied to the communication established between the first device 1 and the communications terminal 2A and the communications protocol applied to the communication established between the communications terminal 2A and the second devices (communications terminals 2B, 2C) are different from each other. Thus, the control unit 22 makes the communications unit 23 communicate with the first device 1 or the second devices while changing the protocols from one to the other.

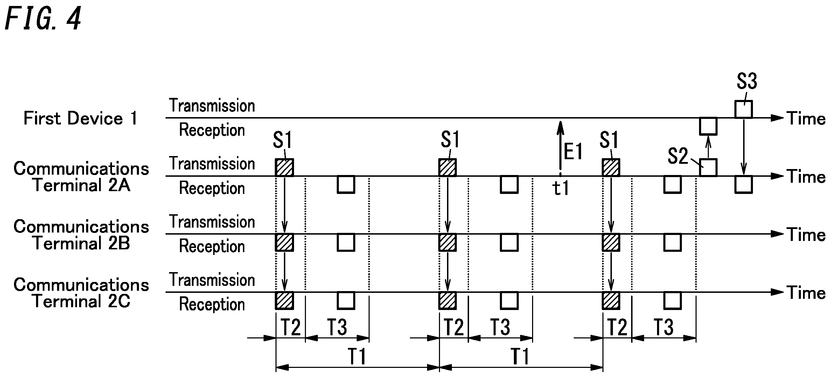

The control unit 22 transmits a beacon signal from the communications unit 23 to the other communications terminals 2B, 2C to establish synchronization with the other communications terminals 2B, 2C and defines, based on the timing when the beacon signal has been transmitted, timings for the communications unit 23 to transmit and receive signals. Specifically, the control unit 22 defines, based on the timing when the communications unit 23 has transmitted the beacon signal, timings to perform the reception operation of receiving signals from the other communications terminals 2B, 2C. In this example, the control unit 22 makes the communications unit 23 transmit the beacon signal S1 at every predetermined time interval T1 (see FIG. 4). The time interval T1 may be about 10 seconds, for example, and a reception period T3 during which the communications unit 23 receives a signal from another communications terminal 2B, 2C may be about 4 seconds, for example. Note that the beacon signal S1 does not have to be transmitted at every predetermined time interval T1. Alternatively, the communications terminal 2A may transmit the beacon signals S1 a few times a day (e.g., once, twice, or three times a day) and all of the communications terminals 2, including the communications terminal 2A, may perform the intermittent reception during the reception period T3, which is set at an interval of 10 seconds, for example, with respect to the timing of transmitting the beacon signal S1. In this case, if the fire detecting unit 21 has detected the outbreak of a fire in any of the plurality of communications terminals 2, that communications terminal 2 performs the operation of transmitting the coordination signal during the reception period T3 of the intermittent reception. On receiving the coordination signal during the reception period T3, each communications terminal 2 sounds the fire warning. This allows all of the plurality of communications terminals 2 to sound the fire warning in coordination with each other.

In making the communications unit 23 transmit a signal to the other communications terminals 2B, 2C, the control unit 22 makes the communications unit 23 transmit the signal at a timing when each of the other communications terminals 2B, 2C is performing the intermittent reception operation.

Also, when a transmission opportunity of transmitting a signal from the communications unit 23 to the first device 1 arises, the control unit 22 makes the communications unit 23 postpone transmitting the signal to the first device 1 until after the communications unit 23 has performed the intermittent reception with another communications terminal 2 (second device) at least once. For example, a transmission opportunity for the control unit 22 to transmit a status notification signal to the first device 1 arises a few times a day. As used herein, the "status notification signal" is a signal transmitted to notify the first device 1 of the operating status of the communications subsystem 20. The status notification signal includes at least one of a signal indicating whether or not there are any errors in any of the plurality of communications terminals 2A-2C included in the communications subsystem 20 or battery level information about the levels of the respective batteries included in the communications terminals 2A-2C. Also, the transmission opportunity of transmitting a signal to the first device 1 includes at least an opportunity of transmitting a certain signal for the first time and an opportunity of re-transmitting a signal that has once failed to be transmitted to the first device 1. Optionally, the transmission opportunity of transmitting a signal to the first device 1 may further include an opportunity of transmitting a confirmation signal. As used herein, the confirmation signal is a signal transmitted for requesting confirmation of the status of communication between the communications terminal 2A and the first device 1 when the signal to be transmitted has been re-transmitted a predetermined number of times without success.

The control unit 22 sends out, upon detection of a fire by the fire detecting unit 21, a fire warning by controlling the alarm warning unit 24. As used herein, the "fire warning" is an early warning that alerts residents or any other group of people to the outbreak of the fire. Specifically, the control unit 22 may either make the buzzer of the alarm warning unit 24 sound a buzz or have a verbal warning message such as "Fire! Fire!" announced through the loudspeaker of the alarm warning unit 24 when the fire detecting unit 21 detects the outbreak of a fire.

In addition, the control unit 22 instructs, when the fire detecting unit 21 detects a fire, the communications unit 23 transmit a signal to the first device 1 and the other communications terminals 2B, 2C. Specifically, first of all, the control unit 22 makes, when the fire detecting unit 21 detects a fire, the communications unit 23 transmit a coordination signal, including a fire warning message indicating that a fire has broken out, to the other communications terminals 2B, 2C. Next, at a timing when the other communications terminals 2B, 2C are performing the intermittent reception operation, the control unit 22 makes the communications unit 23 transmit a notification signal, including the fire warning message, to the other communications terminals 2B, 2C. In this case, the control unit 22 may make the communications unit 23 transmit the coordination signal continuously to allow the other communications terminals 2B, 2C to receive the coordination signal readily while performing the intermittent reception. When the fire warning message has been transmitted successfully to the other communications terminals 2B, 2C, the control unit 22 makes the communications unit 23 transmit a notification signal including the fire warning message to the first device 1. This allows the server 3 to be notified of the outbreak of the fire via the first device 1.

When the communications unit 23 receives the coordination signal from another communications terminal 2B, 2C while performing the intermittent reception, the control unit 22 instructs the alarm warning unit 24 to send out a fire warning. That is to say, no sooner at least one of the plurality of communications terminals 2 detects a fire than all of those communications terminals 2 send out a fire warning in coordination with each other. In addition, the control unit 22 makes the communications unit 23 transmit a notification signal including the fire warning message to the first device 1. This allows the server 3 to be notified of the outbreak of the fire via the first device 1.

The control unit 22 also makes the communications unit 23 transmit a confirmation signal to the other communications terminals 2B, 2C to confirm the status of communication with the other communications terminals 2. Specifically, the control unit 22 makes the communications unit 23 transmit such a confirmation signal at a frequency of approximately 0.9 times a day, for example, to the other communications terminals 2B, 2C at a timing when the other communications terminals 2B, 2C are performing the intermittent reception operation. It is recommended that the packet length of the confirmation signal be set at a relatively long length to allow the other communications terminals 2B, 2C to receive the confirmation signal easily during the intermittent reception. In this embodiment, the confirmation signal has a packet length of, for example, several seconds or less and a communication rate of, for example, 4.8 kbps. This allows, even when the communications terminal 2A and the other communications terminals 2B, 2C are out of synch with each other, the communications terminals 2B, 2C to receive the confirmation signal from the communications terminal 2A more easily. When receiving the confirmation signal from the communications terminal 2A safely, the communications terminals 2B, 2C has an acknowledgement (ACK) transmitted to the communications terminal 2A. Safe receipt of the acknowledgement (ACK) at the communications unit 23 from the other communications terminals 2B, 2C tells the control unit 22 of the communications terminal 2A that the status of communication with the other communications terminals 2B, 2C is normal. Unless the communications unit 23 receives the acknowledgement (ACK) from the other communications terminals 2B, 2C after the confirmation signal has been transmitted, the control unit 22 of the communications terminal 2A determines that the status of communication with the other communications terminals 2B, 2C should be abnormal.

In this case, the coordination signal is transmitted from the communications terminal 2A to the other communications terminals 2B, 2C at a timing when the other communications terminals 2B, 2C are performing the intermittent reception operation. This coordination signal is transmitted to have the alarm warning units 24 of all of the plurality of communications terminals 2 send out a fire warning and alert the residents to the outbreak of a fire. Therefore, the coordination signal is more urgent than any other signal to be transmitted by the communications terminal 2A. That is to say, the communication between the communications terminal 2A as the communications device and the other communications terminals 2B, 2C as the second devices has higher priority than the communication between the communications terminal 2A and the first device 1. In other words, the communication between the communications terminal 2A as the communications device and the first device 1 has lower priority than the communication between the communications terminal 2A and the second devices (i.e., the communications terminals 2B, 2C). As used herein, the "priority" refers to a degree of priority for determining the priority order of communications. Since the communication between the communications terminal 2A as the communications device and the other communications terminals 2B, 2C as the second devices has higher priority than the communication between the communications terminal 2A and the first device 1, the communication between the communications terminal 2A and the first device 1 is postponed in order not to interfere with the communication between the communications terminal 2A and the second devices.

In addition, the interval at which the signals are transmitted to the first device 1 is longer than the intermittent reception interval. Thus, even if the transmission of the signal to the first device 1 is postponed by giving higher priority to the intermittent reception, the signal may still be transmitted to the first device 1 before the next transmission timing comes up.

### (2.3) Another communications subsystem

The communications system 10 of this embodiment further includes another communications subsystem 200 of a different type from the communications subsystem 20. The communications subsystem 200 also includes, as well as the communications subsystem 20, a plurality of communications terminals. In this communications subsystem 200, each communications terminal includes a carbon monoxide (CO) detecting unit instead of the fire detecting unit 21. That is to say, in this communications subsystem 200, each communications terminal serves as a CO alarm/detector with the capability of detecting the presence of carbon monoxide. These communications terminals (i.e., CO alarms/detectors) may be installed, for example, in a basement, or on the ceiling of a garage, of a single-family dwelling house. However, communications terminals of this communications subsystem 200 each have the same configuration as the communications terminals 2 of the communications subsystem 20 except the CO detecting unit. Thus, the following description will be focused on the CO detecting unit, and description of the other constituent elements will be omitted herein.

The CO detecting unit is configured to detect the presence of carbon monoxide and vary the detected quantity (such as a voltage value) according to the amount (e.g., concentration) of the carbon monoxide present. Examples of methods of detecting carbon monoxide include an electrochemical method, a contact burning method, and a semiconductor method. The electrochemical method is a method of detecting the amount of carbon monoxide present by transforming chemical reaction energy, generated by oxidation-reduction reaction, into electrical energy. The contact burning method is a method of detecting the amount of carbon monoxide present by sensing a variation in voltage involved with a variation in the resistance of a detecting element when carbon monoxide burns by reacting to the detecting element. The semiconductor method is a method of detecting the amount of carbon monoxide present by sensing a variation in electric conductivity due to adsorption of a gas onto the surface of a metal-oxide semiconductor. The CO detecting unit compares the detected quantity with a threshold value that has been set in advance by the CO detecting unit and determines that carbon monoxide should be present when finding the detected quantity greater than the threshold value.

### (3) Exemplary operations

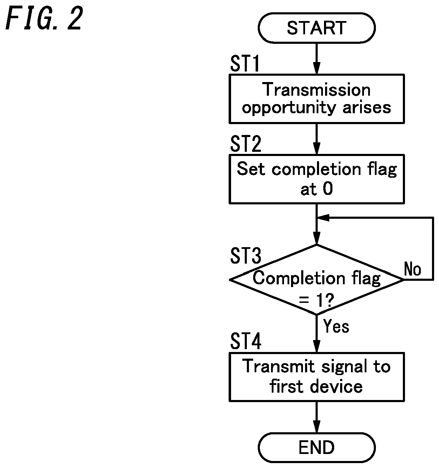

Next, first, second, and third exemplary operations of the communications system 10 (or the communications terminals 2) according to this embodiment will be described with reference to FIGS. 2-6. In the following description, it will be described by way of illustrative example how communication is established between one first device 1 and three communications terminals 2A, 2B, 2C.

In FIGS. 4-6, the "transmission" of the first device 1 indicates the operation of the transmitter circuit of the first communications unit 12. The "transmission" and "reception" of the first device 1 indicate the transmission and reception operations of the first communications unit 12. The "transmission" of the communications terminals 2A-2C indicates the transmission operation of the communications unit 23 and the "reception" of the communications terminals 2A-2C indicates the reception operation of the communications unit 23.

### (3.1) First exemplary operation

A first exemplary operation of the communications system 10 (communications terminals 2) according to this embodiment will be described with reference to FIGS. 2 and 4.

The communications terminal 2A serving as a master device (communications device) transmits a beacon signal S1 to the communications terminals 2B, 2C serving as second devices at predetermined first intervals T1. The communications terminal 2A performs intermittent reception operation during the reception period T3, which begins at a timing when a predetermined amount of time T2 has passed since the transmission of the beacon signal S1. The communications terminals 2B, 2C each establish synchronization by receiving the beacon signal S1 from the communications terminal 2A and define the timing to perform the intermittent reception operation with respect to the timing of reception of the beacon signal S1. In this exemplary operation, the communications terminals 2A-2C each perform intermittent reception operation during the reception period T3, which begins at a timing when a predetermined amount of time T2 has passed since the reception of the beacon signal S1. The communications terminal 2A needs to transmit the beacon signal S1 a few times a day (e.g., once, twice or three times a day). Every communications terminal 2 including the communications terminal 2A may perform the intermittent reception during the reception period T3, which is set at an interval of 10 seconds, for example, with respect to the timing of transmission of the beacon signal S1. If the fire detecting unit 21 of any of the plurality of communications terminals 2 has detected the outbreak of a fire, then that communications terminal 2 performs the operation of transmitting the coordination signal during the intermittent reception period T3. On receiving the coordination signal during the reception period T3, each of the other communications terminals 2 sounds the fire warning, thus allowing all of the plurality of communications terminals 2 to sound the fire warning in coordination with each other.

In this case, if a transmission opportunity E1 of transmitting a status notification signal to the first device 1 arises at a time t1, then the control unit 22 of the communications terminal 2A does not allow the communications unit 23 to transmit the status notification signal to the first device 1 until the intermittent reception has been performed at least once.

When the intermittent reception is performed once after the transmission opportunity E1 has arisen, the control unit 22 of the communications terminal 2A makes the communications unit 23 transmit the status notification signal S2 to the first device 1. When the first communications unit 12 of the first device 1 receives the status notification signal S2 from the communications terminal 2A, the control unit 11 makes the first communications unit 12 transmit an acknowledgement S3 to the communications terminal 2A. When receiving the acknowledgement S3 transmitted from the first device 1 after the status notification signal S2 has been transmitted, the control unit 22 of the communications terminal 2A determines that the status notification signal S2 should have been transmitted successfully to the first device 1.

Also, when a predetermined sleep period passes since the timing of reception of the acknowledgement S3, the communications terminal 2A serving as a master device (communications device) transmits the beacon signal S1 to the communications terminals 2B, 2C as second devices to establish synchronization and perform the intermittent reception operation.

Note that if the communications terminal 2A has failed to transmit the status notification signal S2 to the first device 1, then the communications unit 23 cannot receive the acknowledgement, and therefore, the control unit 22 determines that the status notification signal S2 should have failed to be transmitted. In that case, the control unit 22 re-transmits the status notification signal S2. At the time of this re-transmission, the status notification signal S2 may also be re-transmitted after the intermittent reception has been performed at least once.

Also, if the communications terminal 2 is going to establish wireless communication in compliance with the Specific Low Power Ratio Station standard that uses the 920 MHz frequency band, for example, the communications terminal 2 has a carrier sensing capability to avoid interference with other radio stations. If the communications terminal 2A is going to transmit the status notification signal S2 to the first device 1, the communications terminal 2A determines, before transmitting the status notification signal S2, whether or not any other radio station is using the radio channel that the communications terminal 2A needs to use to transmit the status notification signal S2. If the radio channel is not used by any other radio station, the communications terminal 2A transmits the status notification signal S2 to the first device 1. On the other hand, if the radio channel is used by another radio station, then the communications terminal 2A suspends transmitting the status notification signal S2 once, determines again, in a predetermined amount of time, whether or not the radio channel is being used, and if the answer is NO, transmits the status notification signal S2. In this case, if the status notification signal S2 has failed to be transmitted a predetermined number of times because the radio channel is being used, then the control unit 22 determines that the transmission of the status notification signal S2 should have failed. In that case, the control unit 22 re-transmits the status notification signal S2. At the time of this re-transmission, the status notification signal S2 may also be re-transmitted after the intermittent reception has been performed at least once. Note that even if the communications terminal 2 is going to establish wireless communication in compliance with the Specific Low Power Ratio Station standard that uses the 868 MHz frequency band, the communications terminal 2 also has a carrier sensing capability. In a situation where the communications terminal 2 adopts this communication protocol, if the status notification signal S2 has failed to be transmitted a predetermined number of times on end because another radio station is using the radio channel, then the communications terminal 2 may re-transmit the status notification signal S2 after having performed the intermittent reception at least once.

If the communications terminal 2A is still unable to transmit the status notification signal S2 even after having retried to transmit the status notification signal S2 a predetermined number of times, then the communications terminal 2A may transmit a confirmation signal to the first device 1 in order to check the status of communication with the first device 1 after having performed the intermittent reception at least once. The confirmation signal may be, for example, a hello packet notifying the first device 1 that the communications terminal 2A is alive.

Next, it will be described with reference to the flowchart of FIG. 2 how the communications terminal 2A operates when a transmission opportunity of transmitting a signal to the first device arises.

When a transmission opportunity of transmitting a signal to the first device 1 arises (in ST1), the control unit 22 of the communications terminal 2A sets the value of a completion flag, indicating whether or not the intermittent reception processing has been completed, at zero (in ST2).

When intermittent reception is performed at least once by the communications unit 23, the control unit 22 changes the value of the completion flag from zero to one.

The control unit 22 determines whether or not the value of the completion flag is one (in ST3). When the value of the completion flag goes one (if the answer is YES in ST3), the control unit 22 makes the communications unit 23 transmit a signal to the first device 1 (in ST4).

As can be seen, if a transmission opportunity of transmitting a signal to the first device 1 has arisen, the control unit 22 does not allow the communications unit 23 to transmit the signal to the first device 1 as long as the value of the completion flag is zero but allows the communications unit 23 to transmit the signal to the first device 1 after the value of the completion flag has gone one. Thus, if a transmission opportunity has arisen, the control unit 22 of the communications terminal 2A performs the transmission operation of transmitting a signal to the first device 1 after the intermittent reception operation has been performed at least once. This allows the communications terminal 2A to reduce the chances of transmission of a signal to the first device 1 causing a delay in communication with the communications terminals 2B, 2C serving as second devices. Consequently, this reduces, when a fire has broken out, for example, the chances of causing a delay in the transfer of a fire warning from a communications terminal 2 that has detected the outbreak of the fire to the other communications terminals 2.

In this case, when the transmission opportunity E1 has arisen, the communications unit 23 of the communications terminal 2A may postpone transmitting the signal to the first device 1 until after having performed the intermittent reception. As used herein, "performing the intermittent reception" refers to performing the operation of receiving signals intermittently. Therefore, when the intermittent reception is performed, a signal is not always received actually but no signals may be transmitted from any other communications terminal 2 during a reception period T3 in which the reception operation is performed.

### (3.2) Second exemplary operation

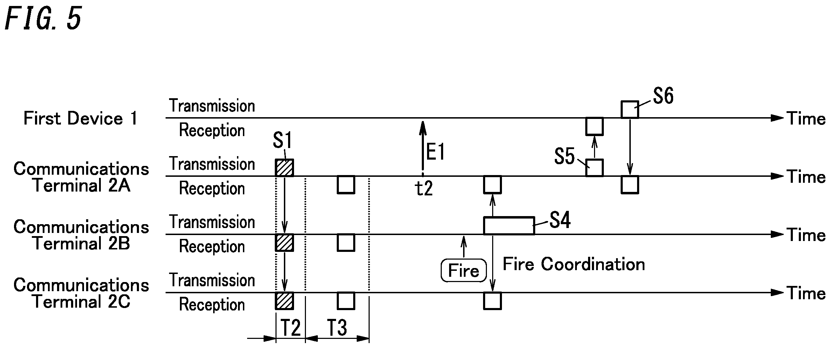

Next, a second exemplary operation of the communications system 10 (or communications terminals 2) according to this embodiment will be described with reference to FIG. 5. Note that before a fire breaks out, the communications system 10 operates in the same way as in the first exemplary operation, and description thereof will be omitted herein.

In this exemplary operation, the communications terminal 2B detects the outbreak of a fire after a time t2 when the transmission opportunity E1 of transmitting a signal from the communications terminal 2A to the first device 1 arises and before the intermittent reception has been performed once.

When the fire detecting unit 21 of the communications terminal 2B detects the outbreak of a fire, the control unit 22 of the communications terminal 2B makes the alarm warning unit 24 sound a fire warning. In addition, at a timing when the intermittent reception operation needs to be performed for the first time since the outbreak of a fire has been detected, the control unit 22 of the communications terminal 2B transmits a coordination signal S4. On receiving the coordination signal S4 from the communications terminal 2B through the intermittent reception operation, the control unit 22 of the communications terminals 2A, 2C makes the alarm warning unit 24 sound a fire warning. This allows all of these communications terminals 2A-2C to sound the fire warning in coordination with each other.

Then, after having received the coordination signal S4, the control unit 22 of the communications terminal 2A serving as a master device (communications device) makes the communications unit 23 transmit an outbreak notification signal S5 as a notification of the outbreak of a fire to the first device 1. When the first communications unit 12 of the first device 1 receives the outbreak notification signal S5 transmitted from the communications terminal 2A, the control unit 11 of the first device 1 makes the first communications unit 12 transmit an acknowledgement S6 to the communications terminal 2A. When the communications unit 23 of the communications terminal 2A receives the acknowledgement S6 from the first device 1, the control unit 22 of the communications terminal 2A determines that the warning forwarding processing of transmitting the outbreak notification signal S5 as a notification of the outbreak of the fire to the first device 1 should have been done successfully, since the acknowledgement S6 has been received.

In the second exemplary operation, when the outbreak of a fire is detected after the transmission opportunity E1 has arisen, the processing of making all of the communications terminals 2A-2C sound the fire warning to transmit the fire outbreak notification to the first device 1 is given priority over the processing of transmitting a signal to be transmitted at the transmission opportunity E1. As can be seen, preferentially performing the processing of sounding the fire warning and transmitting the fire outbreak notification to the first device 1 in this manner reduces the chances of causing a delay in alerting the residents of a single-family dwelling house to the outbreak of the fire or forwarding the fire warning to the first device 1.

Optionally, in the second exemplary operation, when the transmission opportunity E1 arises, the communications unit 23 of the communications terminal 2A may postpone transmitting the signal to the first device 1 until after having performed a series of processing related to the signal received through the intermittent reception. That is to say, when receiving a fire coordination signal S4 while performing the intermittent reception operation after the transmission opportunity E1 has arisen, the control unit 22 of the communications terminal 2A performs, first of all, a series of processing related to the coordination signal S4 (including the processing of sounding a fire warning and the processing of transmitting the outbreak notification signal to the first device 1). Then, after having performed the series of processing related to the coordination signal S4, the control unit 22 of the communications terminal 2A transmits the signal to be transmitted at the transmission opportunity E1 (such as the status notification signal) to the first device 1. In this manner, the communications unit 23 transmits the signal to the first device 1 after having performed the series of processing related to the signal received through the intermittent reception. This reduces the chances of causing a delay in the processing to be performed with respect to the signal received through the intermittent reception. Note that the signal received through the intermittent reception does not have to be the coordination signal as the notification of the outbreak of the fire but may also be a signal as a notification of any other abnormality.

### (3.3) Third exemplary operation

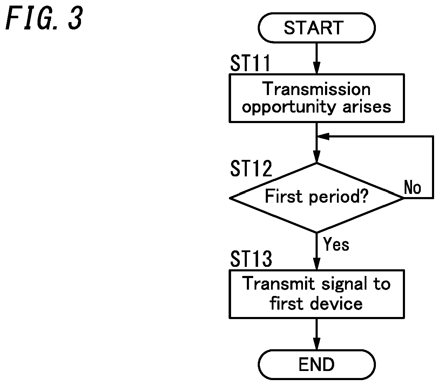

Next, a third exemplary operation of the communications system 10 (or communications terminals 2) according to this embodiment will be described with reference to FIGS. 3, 6, and 7. Before the outbreak of a fire is detected, the communications system 10 operates in the same way as in the second exemplary operation, and description thereof will be omitted herein.

In this exemplary operation, when the fire detecting unit 21 of the communications terminal 2B detects the outbreak of a fire, the control unit 22 of the communications terminal 2B makes the alarm warning unit 24 sound a fire warning. In addition, at a timing when the intermittent reception operation needs to be performed for the first time since the outbreak of a fire has been detected, the control unit 22 of the communications terminal 2B transmits a coordination signal S4. On receiving the coordination signal S4 from the communications terminal 2B through the intermittent reception operation, the control unit 22 of the communications terminals 2A, 2C makes the alarm warning unit 24 sound a fire warning. This allows all of these communications terminals 2A-2C to sound the fire warning in coordination with each other.

Then, after having received the coordination signal S4, the control unit 22 of the communications terminal 2A serving as a master device makes the communications unit 23 transmit an outbreak notification signal S7 as a notification of the outbreak of a fire to the first device 1. When the first communications unit 12 of the first device 1 receives the outbreak notification signal S7 transmitted from the communications terminal 2A, the control unit 11 of the first device 1 makes the first communications unit 12 transmit an acknowledgement S8 to the communications terminal 2A. When the communications unit 23 of the communications terminal 2A receives the acknowledgement S8 from the first device 1, the control unit 22 of the communications terminal 2A determines that the warning forwarding processing of transmitting the outbreak notification signal S7 as a notification of the outbreak of the fire to the first device 1 should have been done successfully, since the acknowledgement S8 has been received.

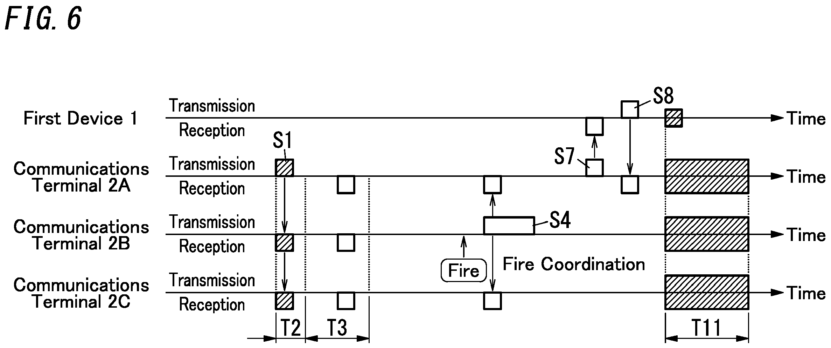

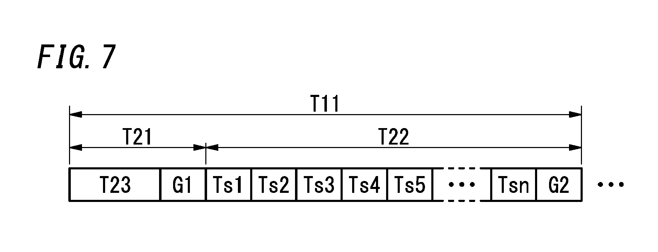

When the outbreak notification signal S7 has been transmitted successfully to the first device 1 after all of the plurality of communications terminals 2 have sounded a fire warning in coordination with each other, the control unit 22 of the communications terminal 2A as a master device makes the communications unit 23 establish time division multiple access (TDMA) communication. In the same way, when the fire warning is sounded, the control unit 22 of the other communications terminals 2B, 2C also makes their communications unit 23 establish TDMA communication. Specifically, after the fire warning has been sounded in coordination with each other, a time period T11, including a first time period T21 in which the communications terminal 2A communicates with the first device 1 and a second time period T22 in which the communications terminals 2 establish TDMA communication between themselves, is repeated at predetermined intervals as shown in FIGS. 6 and 7. When a transmission opportunity of transmitting a signal to the first device 1 arises in the communications terminal 2A after the fire warning has been sounded in coordination with each other, the signal is transmitted from the communications terminal 2A to the first device 1 in the first time period T21. In this example, the first time period T21 may have a time length of 0.4 S, for example, and the second time period T22 may have a time length of 2.6 S, for example. Note that the plurality of communications terminals 2A-2C may establish the TDMA communication by establishing synchronization based on the beacon signal transmitted from the communications terminal 2A, for example.

In this example, the first time period T21 is subdivided into a transmission period T23 in which the signal is transmitted to the first device 1 and a guard period G1 to avoid interference between data. The transmission period T23 is a period in which the communications terminal 2A transmits the signal to the first device 1.

The second time period T22 includes: a time slot Ts1 allowing the communications terminal 2A as a master device to establish communication; time slots Ts2-Tsn allowing up to fourteen second devices (i.e., other communications terminals 2) to communicate with each other; and a guard period G2 for avoiding interference between data. In this case, the guard periods G1, G2 are time periods during which no signals are transmitted. The guard periods G1, G2 may each have a time length of 100 mS, for example. The time slot Ts1 may have a time length of 100 mS, for example. The time slots Ts2-Ts16 may each have a time length of 160 mS, for example.

The communications terminal 2A transmits the signal to the first device 1 in the transmission period T23. Each communications terminal 2 transmits a signal in a time slot allocated to itself (i.e., the communications terminal 2 itself) in the second time period T22, thereby transmitting the signal to the other communications terminals 2. On the other hand, in the time slots of the second time period T22 other than the time slot allocated to itself (i.e., the communications terminal 2 itself), each communications terminal 2 perform the reception operation of receiving signals from the other communications terminals 2.

As can be seen, in each of the communications terminals 2 according to this embodiment, the transmission mode of transmitting the signal from the communications unit 23 to the first device 1 includes a first transmission mode and a second transmission mode. The communications unit 23 is able to change the mode of transmitting the signal to the first device 1 to either the first transmission mode or the second transmission mode. In other words, the control unit 22 is able to switch the transmission mode to either the first transmission mode or the second transmission mode. The first transmission mode is a transmission mode before the outbreak of a fire is detected. In the first transmission mode, the signal is transmitted to the first device 1 after the intermittent reception has been performed at least once. In the second transmission mode, the transmission period T23 for transmitting the signal to the first device 1 is repeated at predetermined intervals. The second transmission mode is a transmission mode after the outbreak of a fire has been detected, for example. In the second transmission mode, the communications unit 23 alternately repeats the transmission period T23 (first period) for transmitting the signal to the first device 1 and the second period T22 for establishing TDMA communication between the communications terminal 2A and the other communications terminals 2B, 2C. In the second transmission mode, the first time period (transmission period T23) for establishing communication between the communications terminal 2A and the first device 1 and the second period T22 for establishing communication between the communications terminal 2 themselves are repeated alternately.

The operation of the communications terminal 2A in the first transmission mode is just as described for the exemplary embodiment and description thereof will be omitted herein. Thus, the operation of the communications terminal 2A in the second transmission mode will be described with reference to FIG. 3. If an event requiring the communications subsystem 20 to transmit a signal to the first device 1 arises in the second transmission mode (in ST11), then the control unit 22 of the communications terminal 2A determines whether or not it is a transmission period T23 (first time period) (in ST12). If it is not the first time period (if the answer is NO in ST12), then the control unit 22 stops transmitting the signal from the communications unit 23 to the first device 1 to wait for a signal to be transmitted. Thereafter, when the first time period comes up (if the answer is YES in ST12), then the control unit 22 makes the communications unit 23 transmit a signal to the first device 1. As can be seen, if an event requiring the communications subsystem 20 to transmit a signal to the first device 1 arises in the second transmission mode, then the communications unit 23 of the communications terminal 2A may transmit the signal to the first device 1 in the first time period (transmission period T23) that comes up for the first time since the transmission opportunity has arisen. This allows, even when a transmission opportunity arises in the second transmission mode, the communications unit 23 to transmit the signal to the first device 1 without waiting for the intermittent reception operation to be performed at least once. Thus, the signal may be transmitted to the first device 1 quickly.

### (5) Variations

Note that the embodiment described above is only an exemplary one of various embodiments of the present disclosure and should not be construed as limiting. Rather, the embodiment may be readily modified, combined, or replaced in various manners depending on a design choice or any other factor without departing from a true spirit and scope of the present disclosure.

Optionally, the same functions as those of the communications terminal 2 may also be implemented as a communication method, a computer program, or a computer-readable non-transitory storage medium that stores the program thereon. A communication method according to an aspect is designed to be used in a communications terminal 2A that transmits a signal to a first device 1 and receives a signal from a second device (communications terminal 2B, 2C). According to this communication method, unless a transmission opportunity of transmitting the signal to the first device 1 arises, intermittent reception is performed to intermittently carry out the reception operation of receiving the signal from the second device (communications terminal 2B, 2C). Meanwhile, when the transmission opportunity of transmitting the signal to the first device 1 arises, the signal is transmitted to the first device 1 until after the intermittent reception has been carried out at least once. A (computer) program according to another aspect is designed to cause a computer system to carry out the first processing and the second processing.

The communications terminals 2 (including the communications terminal 2A as a communications device and the communications terminals 2B, 2C as second devices) according to the exemplary embodiment described above each include a computer system. In that case, the computer system may include, as principal hardware components, a processor and a memory. The functions of the communications terminal 2 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). As used herein, the "integrated circuit" such as an IC or an LSI is called by a different name depending on the degree of integration thereof. Examples of the integrated circuits include a system LSI, a very largescale integrated circuit (VLSI), and an ultra largescale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a largescale integrated circuit.

In the exemplary embodiments described above, each of the communications terminals 2 is implemented as a fire alarm in which the amount of current consumed by the communications unit 23 is limited to an upper limit value or less because the communications terminal 2 is driven by battery. However, this is only an example and should not be construed as limiting. The communications terminal 2 does not have to be implemented as a fire alarm but may be implemented as any other type of device. Specifically, the communications terminal 2 may be implemented as, for example, a battery driven IoT (Internet of things) device. In addition, the communications terminal 2 does not have to be driven by battery but may also be implemented as a two-wired dimmer switch connected to an AC power supply and a lighting load in series. The two-wired dimmer switch is connected to the AC power supply and the lighting load in series to control the intensity of the lighting load by performing phase control on the current flowing through the lighting load. In such a dimmer switch, the deeper the lighting control level is, the shorter the period in which a current is allowed to flow through the lighting load during one period of the AC power supply, thus making it increasingly difficult to provide sufficient power for the dimmer switch itself. Thus, the amount of current consumed by the communications unit is limited to an upper limit value or less. Even in such a two-wired dimmer switch, the communications unit's performing the intermittent reception also allows the signal to be transmitted to the first device 1 while reducing the amount of current consumed by the communications unit.

In the exemplary embodiments described above, the communications terminal 2A is configured to communicate with the other communications terminals 2B, 2C having the same configuration as the communications terminal 2A itself and serving as second devices. However, this is only an example and should not be construed as limiting. Alternatively, the communications terminal 2A may communicate with devices having a different configuration from itself and serving as second devices.

Also, in the embodiments described above, the communications subsystem 20 is made up of fire alarms only. Optionally, the communications subsystem 20 may also include a CO detector with a CO sensing/detecting unit as one of the communications terminals 2. Alternatively, each communications terminal 2 may include both the fire detecting unit 21 and the CO detecting unit.

Optionally, the first device 1 may be configured to control the components that make up two different systems (i.e., communications subsystems 20, 200) such that the two different systems (communications subsystems 20, 200) operate in coordination with each other. For example, if the first device 1 has received, from a communications terminal 2 (fire alarm), a notification signal as a notification of the outbreak of a fire, then the first device 1 instructs the communications terminal (CO detector) that forms part of the communications subsystem 200 to sound an alarm.

### Reference Signs List

- 1: First Device
- 2A: Communications Terminal (Communications Device)
- 2B, 2C: Communications Terminal (Second Device)
- 10: Communications System
- 20: Communications Subsystem
- 22: Control Unit
- 23: Communications Unit
- T22: Second Period
- T23: Transmission Period

## Claims

1. A communications device (2A) comprising:
a communications unit (23) configured to perform transmission of a signal to a first device (1) and intermittent reception of intermittently performing reception operation of receiving a signal from a second device (2B, 2C); and
a control unit (22) configured to control the communications unit (23), and **characterized by** the control unit (22) being configured to, when a transmission opportunity of transmitting the signal to the first device (1) arises, make the communications unit (23) postpone transmitting the signal to the first device (1) until after the communications unit (23) has performed the intermittent reception at least once.

2. The communications device (2A) of claim 1, wherein
the control unit (22) is configured to, when the transmission opportunity arises, make the communications unit (23) postpone transmitting the signal to the first device (1) until after the communications unit (23) has finished the intermittent reception.

3. The communications device (2A) of claim 2, wherein
the control unit (22) is configured to, when the transmission opportunity arises, make the communications unit (23) postpone transmitting the signal to the first device (1) until after the control unit (22) has performed a series of processing related to the signal received through the intermittent reception.

4. The communications device (2A) of any one of claims 1 to 3, wherein
the transmission opportunity includes an opportunity of making the communications unit (23) re-transmit a signal that has once failed to be transmitted to the first device (1).

5. The communications device (2A) of any one of claims 1 to 4, wherein
communication with the first device (1) has lower priority than communication with the second device (2B, 2C).

6. The communications device (2A) of any one of claims 1 to 5, wherein
an interval at which the signal is transmitted to the first device (1) is longer than an interval of the intermittent reception.

7. The communications device (2A) of any one of claims 1 to 6, wherein
a transmission mode of transmitting the signal from the communications unit (23) to the first device (1) includes a first transmission mode and a second transmission mode,
the communications unit (23) is configured to postpone, in the first transmission mode, transmitting the signal to the first device (1) until after having performed the intermittent reception at least once,
the communications unit (23) is configured to repeat, in the second transmission mode, a transmission period (T23) for transmitting the signal to the first device (1) at predetermined intervals, and
the control unit (22) is configured to switch the transmission mode to either the first transmission mode or the second transmission mode.

8. The communications device (2A) of claim 7, wherein
the communications unit (23) is configured to alternately repeat, in the second transmission mode, a first period that is the transmission period (T23) and a second period (T22) during which the communications unit (23) establishes time division multiple access communication with the second device (2B, 2C).

9. The communications device (2A) of claim 8, wherein
the communications unit (23) is configured to transmit, in the second transmission mode, the signal to the first device (1) in the first period that comes up for the first time since the transmission opportunity has arisen.

10. The communications device (2A) of any one of claims 1 to 9, wherein
an amount of current consumed by the communications unit (23) is limited to an upper limit value or less.

11. The communications device (2A) of any one of claims 1 to 10, wherein
a first frequency band that the communications unit (23) uses for communication with the first device (1) and a second frequency band that the communications unit (23) uses for communication with the second device (2B, 2C) are different from each other.

12. A communications subsystem (20) comprising:
the communications device (2A) of any one of claims 1 to 11; and
the second device (2B, 2C).

13. A communications system (10) comprising:
the communications subsystem (20) of claim 12; and
the first device (1).

14. A communication method for use in a communications device (2A) that is configured to transmit a signal to a first device (1) and receive a signal from a second device (2B, 2C), the communication method comprising:
performing, unless a transmission opportunity of transmitting the signal to the first device (1) arises, intermittent reception of intermittently performing reception operation of receiving the signal from the second device (2B, 2C); and **characterized by**
postponing, when the transmission opportunity of transmitting the signal to the first device (1) arises, transmitting the signal to the first device (1) until after having performed the intermittent reception at least once.

15. A computer-readable non-transitory storage medium that stores a program designed to cause at least one processor to carry out the communication method of claim 14.

## Patentansprüche

1. Kommunikationsvorrichtung (2A), aufweisend:
eine Kommunikationseinheit (23), die konfiguriert ist, um eine Übertragung eines Signals zu einer ersten Vorrichtung (1) und einen intermittierenden Empfang eines intermittierenden Durchführens einer Empfangsoperation des Empfangens eines Signals von einer zweiten Vorrichtung (2B, 2C) durchzuführen; und
eine Steuereinheit (22), die konfiguriert ist, um die Kommunikationseinheit (23) zu steuern, und **dadurch gekennzeichnet ist, dass**
die Steuereinheit (22) konfiguriert ist, um, wenn sich eine Übertragungsmöglichkeit zum Übertragen des Signals an die erste Vorrichtung (1) ergibt, die Kommunikationseinheit (23) zu veranlassen, ein Übertragen des Signals an die erste Vorrichtung (1) aufzuschieben, bis die Kommunikationseinheit (23) den intermittierenden Empfang mindestens einmal durchgeführt hat.

2. Kommunikationsvorrichtung (2A) nach Anspruch 1, wobei die Steuereinheit (22) konfiguriert ist, um, wenn sich die Übertragungsmöglichkeit ergibt, die Kommunikationseinheit (23) zu veranlassen, ein Übertragen des Signals an die erste Vorrichtung (1) aufzuschieben, bis die Kommunikationseinheit (23) den intermittierenden Empfang beendet hat.

3. Kommunikationsvorrichtung (2A) nach Anspruch 2, wobei die Steuereinheit (22) konfiguriert ist, um, wenn sich die Übertragungsmöglichkeit ergibt, die Kommunikationseinheit (23) zu veranlassen, ein Übertragen des Signals an die erste Vorrichtung (1) aufzuschieben, bis die Steuereinheit (22) eine Reihe von Verarbeitungen in Bezug auf das Signal, das durch den intermittierenden Empfang empfangen wurde, durchgeführt hat.

4. Kommunikationsvorrichtung (2A) nach einem der Ansprüche 1 bis 3, wobei
die Übertragungsmöglichkeit eine Möglichkeit umfasst, die Kommunikationseinheit (23) zu veranlassen, ein Signal, das einmal nicht an die erste Vorrichtung (1) übertragen werden konnte, erneut zu übertragen.

5. Kommunikationsvorrichtung (2A) nach einem der Ansprüche 1 bis 4, wobei
Kommunikation mit der ersten Vorrichtung (1) eine niedrigere Priorität hat als Kommunikation mit der zweiten Vorrichtung (2B, 2C).

6. Kommunikationsvorrichtung (2A) nach einem der Ansprüche 1 bis 5, wobei
ein Intervall, in dem das Signal an die erste Vorrichtung (1) übertragen wird, länger ist als ein Intervall des intermittierenden Empfangs.

7. Kommunikationsvorrichtung (2A) nach einem der Ansprüche 1 bis 6, wobei
ein Übertragungsmodus zum Übertragen des Signals von der Kommunikationseinheit (23) an die erste Vorrichtung (1) einen ersten Übertragungsmodus und einen zweiten Übertragungsmodus aufweist,
die Kommunikationseinheit (23) konfiguriert ist, um in dem ersten Übertragungsmodus ein Übertragen des Signals an die erste Vorrichtung (1) aufzuschieben, bis sie den intermittierenden Empfang mindestens einmal durchgeführt hat,
die Kommunikationseinheit (23) konfiguriert ist, um in dem zweiten Übertragungsmodus eine Übertragungsperiode (T23) zum Übertragen des Signals an die erste Vorrichtung (1) in vorbestimmten Intervallen zu wiederholen, und
die Steuereinheit (22) konfiguriert ist, um den Übertragungsmodus entweder auf den ersten Übertragungsmodus oder auf den zweiten Übertragungsmodus umzuschalten.

8. Kommunikationsvorrichtung (2A) nach Anspruch 7, wobei die Kommunikationseinheit (23) konfiguriert ist, um in dem zweiten Übertragungsmodus abwechselnd eine erste Periode, die die Übertragungsperiode (T23) ist, und eine zweite Periode (T22) wiederholt, während der die Kommunikationseinheit (23) eine Zeitmultiplex-Mehrfachzugriffskommunikation mit der zweiten Vorrichtung (2B, 2C) herstellt.

9. Kommunikationsvorrichtung (2A) nach Anspruch 8, wobei die Kommunikationseinheit (23) konfiguriert ist, um in dem zweiten Übertragungsmodus das Signal an die erste Vorrichtung (1) in der ersten Periode überträgt, die zum ersten Mal auftritt, seit sich die Übertragungsmöglichkeit ergeben hat.

10. Kommunikationsvorrichtung (2A) nach einem der Ansprüche 1 bis 9, wobei
eine Strommenge, die von der Kommunikationseinheit (23) verbraucht wurde, auf einen oberen Grenzwert oder weniger begrenzt ist.

11. Kommunikationsvorrichtung (2A) nach einem der Ansprüche 1 bis 10, wobei
ein erstes Frequenzband, das die Kommunikationseinheit (23) für die Kommunikation mit dem ersten Vorrichtung (1) verwendet, und ein zweites Frequenzband, das die Kommunikationseinheit (23) für die Kommunikation mit dem zweiten Vorrichtung (2B, 2C) verwendet, voneinander verschieden sind.

12. Kommunikationssubsystem (20), aufweisend:
die Kommunikationsvorrichtung (2A) nach einem der Ansprüche 1 bis 11; und
die zweite Vorrichtung (2B, 2C).

13. Kommunikationssystem (10), aufweisend:
das Kommunikationssubsystem (20) nach Anspruch 12; und
die erste Vorrichtung (1).

14. Kommunikationsverfahren zur Verwendung in einer Kommunikationsvorrichtung (2A), die konfiguriert ist, um ein Signal an eine erste Vorrichtung (1) zu übertragen und ein Signal von einer zweiten Vorrichtung (2B, 2C) zu empfangen, wobei das Kommunikationsverfahren umfasst:
Durchführen eines intermittierenden Empfangs des intermittierenden Durchführens einer Empfangsoperation des Empfangens des Signals von der zweiten Vorrichtung (2B, 2C), es sei denn, es ergibt sich eine Übertragungsmöglichkeit zum Übertragen des Signals an die erste Vorrichtung (1); und
**gekennzeichnet durch**
Aufschieben des Übertragens des Signals an die erste Vorrichtung (1), wenn sich die Übertragungsmöglichkeit zum Übertragen des Signals an die erste Vorrichtung (1) ergibt, bis nachdem der intermittierende Empfang mindestens einmal durchgeführt wurde.

15. Computerlesbares, nicht-flüchtiges Speichermedium, das ein Programm speichert, das dazu bestimmt ist, mindestens einen Prozessor zu veranlassen, das Kommunikationsverfahren nach Anspruch 14 auszuführen.

## Revendications

1. Dispositif de communication (2A) comprenant :
une unité de communication (23) configurée de manière à mettre en œuvre la transmission d'un signal à un premier dispositif (1), et une réception intermittente consistant à mettre en œuvre par intermittence une opération de réception d'un signal provenant d'un second dispositif (2B, 2C) ; et
une unité de commande (22) configurée de manière à commander l'unité de communication (23) ; et
**caractérisé en ce que** :
l'unité de commande (22) est configurée de manière à, lorsqu'une occasion de transmission du signal au premier dispositif (1) se présente, amener l'unité de communication (23) à reporter la transmission du signal au premier dispositif (1) jusqu'à ce que l'unité de communication (23) ait mis en œuvre la réception intermittente au moins une fois.

2. Dispositif de communication (2A) selon la revendication 1, dans lequel :
l'unité de commande (22) est configurée de manière à, lorsque l'occasion de transmission se présente, amener l'unité de communication (23) à reporter la transmission du signal au premier dispositif (1) jusqu'à ce que l'unité de communication (23) ait terminé la réception intermittente.

3. Dispositif de communication (2A) selon la revendication 2, dans lequel :
l'unité de commande (22) est configurée de manière à, lorsque l'occasion de transmission se présente, amener l'unité de communication (23) à reporter la transmission du signal au premier dispositif (1) jusqu'à ce que l'unité de commande (22) ait mis en œuvre une série de traitements liés au signal reçu par le biais de la réception intermittente.

4. Dispositif de communication (2A) selon l'une quelconque des revendications 1 à 3, dans lequel :
l'occasion de transmission inclut une occasion visant à amener l'unité de communication (23) à retransmette un signal pour lequel une première transmission au premier dispositif (1) a échoué.

5. Dispositif de communication (2A) selon l'une quelconque des revendications 1 à 4, dans lequel :
une communication avec le premier dispositif (1) a une priorité inférieure à une communication avec le second dispositif (2B, 2C).

6. Dispositif de communication (2A) selon l'une quelconque des revendications 1 à 5, dans lequel :
un intervalle auquel le signal est transmis au premier dispositif (1) est plus long qu'un intervalle de la réception intermittente.

7. Dispositif de communication (2A) selon l'une quelconque des revendications 1 à 6, dans lequel :
un mode de transmission du signal, de l'unité de communication (23) au premier dispositif (1), inclut un premier mode de transmission et un second mode de transmission ;
l'unité de communication (23) est configurée de manière à reporter, dans le premier mode de transmission, la transmission du signal au premier dispositif (1), jusqu'à ce qu'elle ait mis en œuvre la réception intermittente au moins une fois ;
l'unité de communication (23) est configurée de manière à répéter, dans le second mode de transmission, une période de transmission (T23) pour transmettre le signal au premier dispositif (1) à des intervalles prédéterminés ; et
l'unité de commande (22) est configurée de manière à commuter le mode de transmission soit sur le premier mode de transmission, soit sur le second mode de transmission.

8. Dispositif de communication (2A) selon la revendication 7, dans lequel :
l'unité de communication (23) est configurée de manière à répéter alternativement, dans le second mode de transmission, une première période qui correspond à la période de transmission (T23), et une seconde période (T22) au cours de laquelle l'unité de communication (23) établit une communication à accès multiple par répartition dans le temps avec le second dispositif (2B, 2C).

9. Dispositif de communication (2A) selon la revendication 8, dans lequel :
l'unité de communication (23) est configurée de manière à transmettre, dans le second mode de transmission, le signal, au premier dispositif (1), au cours de la première période qui se présente pour la première fois depuis que l'occasion de transmission s'est présentée.

10. Dispositif de communication (2A) selon l'une quelconque des revendications 1 à 9, dans lequel :
une quantité de courant consommée par l'unité de communication (23) est limitée à une valeur limite supérieure ou moins.

11. Dispositif de communication (2A) selon l'une quelconque des revendications 1 à 10, dans lequel :
une première bande de fréquences que l'unité de communication (23) utilise en vue de communiquer avec le premier dispositif (1) et une seconde bande de fréquences que l'unité de communication (23) utilise en vue de communiquer avec le second dispositif (2B, 2C) sont différentes l'une de l'autre.

12. Sous-système de communication (20) comprenant :
le dispositif de communication (2A) selon l'une quelconque des revendications 1 à 11 ; et
le second dispositif (2B, 2C).

13. Système de communication (10) comprenant :
le sous-système de communication (20) selon la revendication 12 ; et
le premier dispositif (1).

14. Procédé de communication destiné à être utilisé dans un dispositif de communication (2A) qui est configuré de manière à transmettre un signal à un premier dispositif (1) et à recevoir un signal en provenance d'un second dispositif (2B, 2C), le procédé de communication comprenant l'étape ci-dessous consistant à :
mettre en œuvre, à moins qu'une occasion de transmission du signal au premier dispositif (1) ne se présente, une réception intermittente consistant à mettre en œuvre par intermittence une opération de réception du signal provenant du second dispositif (2B, 2C) ; et
**caractérisé par** l'étape ci-dessous consistant à :
reporter, lorsque l'occasion de transmission du signal au premier dispositif (1) se présente, la transmission du signal au premier dispositif (1), jusqu'à ce que la réception intermittente ait été mise en œuvre au moins une fois.

15. Support de stockage non transitoire lisible par ordinateur qui stocke un programme conçu pour amener au moins un processeur à mettre en œuvre le procédé de communication selon la revendication 14.
